# EUROPÄISCHE PATENTSCHRIFT

(11) **EP 1 629 699 B1**
(45) Veröffentlichungstag und Bekanntmachung des Hinweises auf die Patenterteilung: **22.11.2006**
(21) Anmeldenummer: 04732593.1
(22) Anmeldetag: 13.05.2004
(51) Int. Cl.: H05B 7/10

(54) **GLEICHSTROM-LICHTBOGENOFEN**
DIRECT CURRENT ARC FURNACE
FOUR A ARC A COURANT CONTINU

(30) Priorität: 04.06.2003 DE 10325169
(43) Veröffentlichungstag der Anmeldung: 01.03.2006
(73) Patentinhaber: SMS Demag Aktiengesellschaft, 40237 Düsseldorf (DE)
(72) Erfinder: LEMBGEN, Hans-Erich, 40477 Düsseldorf (DE); KUNZE, Jürgen, 46509 Xanten (DE); KUMMER, Karl-Heinz, 47249 Duisburg (DE); SCHMIEDEN, Hartmut, 47661 Issum (DE)
(74) Vertreter: Valentin, Ekkehard
(86) Internationale Anmeldenummer: PCT/EP2004/005122
(87) Internationale Veröffentlichungsnummer: WO 2004/110104

(56) Entgegenhaltungen:
- DE-A- 1 807 042
- US-A- 3 057 935
- US-A- 3 819 841
- US-A- 4 543 656
- US-A- 5 146 469
- US-A- 5 757 841
- US-A- 5 956 366
- US-B1- 6 330 270

## Beschreibung

Die Erfindung betrifft einen Gleichstrom-Lichtbogenofen mit mindestens einer Elektrode, die im Ofeninneren gehalten und zur Kompensation des Elektrodenabbrandes nachführbar ist, sowie mit einer Gegenelektrode im Ofen, beispielsweise einer Bodenelektrode, wobei der gesamte Elektrodenstrang mit einer Elektrodenfassung und einer Nachsetzeinrichtung als Hängesystem an einer Ofenbühne oder einem Rahmen oberhalb des Ofens angeordnet ist,

In der Regel sind Gleichstrom-Lichtbogenöfen zum Einschmelzen von Stahlschrott mit mindestens einer zentral angeordneten Elektrode sowie mindestens einer Bodeneelektrode versehen, um den Stromfluss durch das Stahlbad zu bewirken. Bekanntermaßen wird die von oben in das Ofengefäß hineinragende Elektrode mittels einer Tragarmkonstruktion gehalten und geführt, die seitlich neben dem Ofen angeordnet ist und sich in L-Form über den Ofendeckel erstreckt. Mittels des Tragarms wird die Elektrode vertikal in den Ofen gefahren und dort zum Ausgleich des Verbrauchs der Elektrodenspitze nachgesetzt. Da zum Chargieren des Ofens, beispielsweise mit Schrott, der Ofendeckel verschwenkt wird, ist die Elektrode mit Hilfe dieser Tragarmkonstruktion ebenfalls aus dem Ofen verfahrbar. Eine solche Tragarmkonstruktion ist beispielsweise aus der DE 36 40 298 A1 oder aus der DE 195 26 161 C2 bekannt.

Bei Reduktionsöfen ist es bekannt, den Elektrodenstrang mit einer Elektrodenfassungshalterung oberhalb des Ofendeckels anzuordnen, wie dies beispielsweise in der DE 43 42 511 A1 beschrieben wird. Hiernach wird die in den Ofen ragende Elektrode von einem Klemmring einer Nachsetzeinrichtung gefasst, die sich über einen Hubzylinder auf einem Rahmen abstützt. Am Rahmen ist eine Elektrodenfassungshalterung befestigt, an der ein Elektrodenfassungsring, der die Elektrode ebenfalls umgreift, angeordnet ist. Der Rahmen stützt sich über einen Regulierzylinder auf eine Regulier- und Wartungsbühne ab. Die Elektrode kann mittels der Nachsetzvorrichtung auch wieder zurückgesetzt werden.

Weitere Konstructionen für Lichtbogenöfen sind aus US-A-5 146 469, US-A-4 543 656, US-B-6 330 270, US-A-3 057 935 oder US-A-3 819 841 bekannt.

Bei der bekannten Tragarmkonstruktion von Gleichstrom-Lichtbogenöfen ist ein großer Tragarmhub notwendig, um auf das neu angenippelte Elektrodenstück umzugreifen. Aufgrund der durch den Gleichstrombetrieb hervorgerufenen Vibrationen wird der Tragarm, der die Elektrode hält und führt, zusätzlich in Schwingungen versetzt. Diese Schwingungsbewegung des Tragarms führt zu unkontrollierten Bewegungen der Elektrode an der Dichtung am Ofendeckel. Die Folge sind Verschleißerscheinungen und damit Undichtigkeiten.

Des weiteren muss beim Nachsetzen bzw. Annippeln der Elektrode die Energiezufuhr zum Ofen unterbrochen werden. Außerdem benötigt der Ofenkran eine große Tragkraft zum Halten der Elektrode beim Nachsetzen bzw. Annippeln.

Ausgehend hiervon liegt der Erfindung die Aufgabe zugrunde, bei einem mit Gleichstrom betriebenen Ofen Leistungsverluste beim Nachsetz- bzw. Annipelvorgang zu vermeiden und die Abdichtung der Elektrode im Ofendeckel, insbesondere bei Betrieb des Ofens mit einer hochkonzentrierten CO-Atmosphäre, zu verbessern.

Diese Aufgabe wird durch einen Ofen mit den Merkmalen des Anspruchs 1 gelöst. Vorteilhafte Weiterentwicklungen sind in den Unteransprüchen beschrieben.

Grundgedanke der Erfindung ist es, für einen Gleichstrom-Lichtbogenofen den für einen Reduktionsofen typischen Wechselstrom-Elektrodenstrang bzw. ein typisches Elektrodenstrangdesign zu verwenden. Der Elektrodenstrang setzt sich im Wesentlichen aus einer Elektrodenfassung und einer Nachsetzeinrichtung zusammen, die an einer oberhalb des Ofens angeordneten Ofenbühne bzw. einem Rahmen angeordnet ist.

Durch diesen Elektrodenstrang ist es möglich, die Elektrode nachsetzen sowie rücksetzen zu können, ohne die Energiezufuhr des Ofens unterbrechen zu müssen, sowie ohne Benutzung von schwerem Gerät, wie den Ofenhaus-Kran. Entsprechendes gilt für den Anschluss eines neuen Elektrodenstücks. Nachsetzen bzw. Annippeln sind bei gleichzeitigem Einbringen von Energie in den Ofen weiterhin möglich. Dies bedeutet ein größeres Ausbringen an Schmelzgut, weil weniger planmäßige Ofenabschaltungen und damit Prozessablaufunterbrechungen notwendig sind.

Durch den verwendeten Elektrodensstrang werden Vibrationen der Elektrode sowie unerwünschte horizontale Bewegungen, die in Kombination mit einer Tragarmhalterung auftreten, vermieden. Dies führt zu einer besseren Abdichtung der Elektrode im Ofendeckel, was sich günstig für den sicheren OfenBetrieb, insbesondere mit einer hochkonzentrierten CO-Atmosphäre, erweist.

Vorzugsweise kann die Elektrode des Elektrodenstrangs auch als Hohlelektrode ausgebildet werden, mit deren Hilfe Beschickungsgut, beispielsweise feines Beschickungsmaterial, in den Ofen gefördert werden kann.

Die Erfindung wird nachfolgend mit Hilfe eines Ausführungsbeispiels anhand der Fig. erläutert:

Hierbei zeigen
- Fig. 1: eine Seitenansicht eines erfindungsgemäßen Gleichstrom-Lichtbogenofens in Kombination mit einem für einen Reduktionsofen typischen Elektrodenstrang;
- Fig. 2: im Detail das Hängesystem des Elektrodenstrangs nach Fig. 1;
- Fig. 3: die Schnittansicht A-A der Fig. 2;
- Fig. 4: die Schnittansicht B-B der Fig. 3.

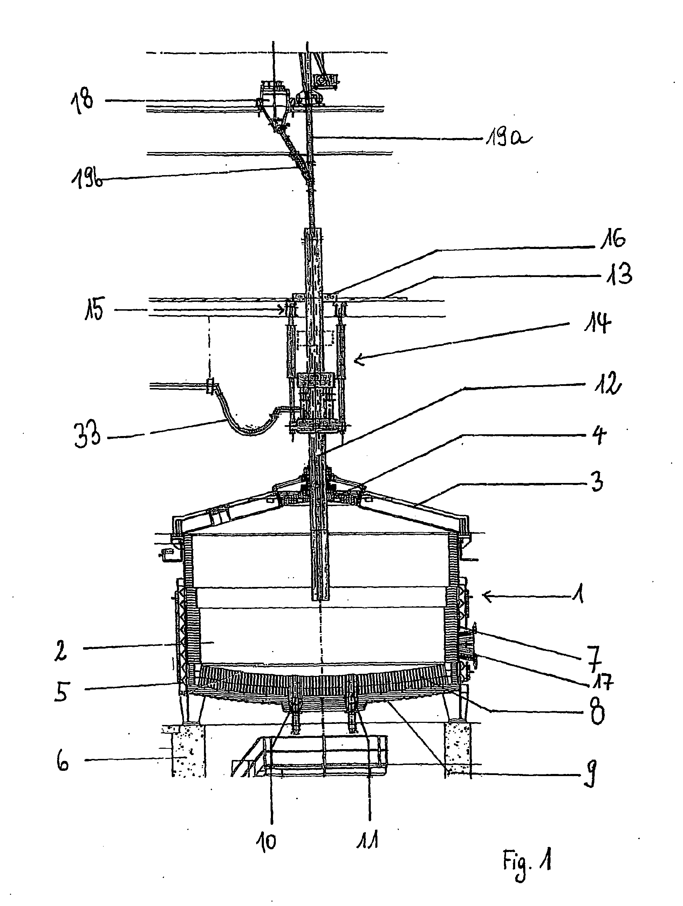

Fig. 1 zeigt einen Lichtbogenofen 1, der mit Gleichstrom arbeitet. Dieser umfasst im Wesentlichen ein Ofengefäß 2 und einen Ofendeckel 3 mit zentriertem Deckelherz 4. Das Ofengefäß 2 ist mittels einer Rahmenkonstruktion 5 auf Säulen 6 fest angeordnet. Die Ofenwandung 7 ist innenseitig mit Feuerfest-Material 8 ausgekleidet; im Ofenboden 9 sind zwei Bodenelektroden 10, 11 angeordnet. In das
Ofeninnere ragt von oben eine Elektrode 12 hinein, die nicht, wie herkömmlich bei dieser Art von Öfen üblich, an einem Tragarm, der neben dem Ofen angeordnet ist, befestigt ist, sondern an einen, an der Ofenbühne 13 befestigten, Elektrodenstrang 14, der bei der gezeigten Ausführungsform als Hängesystem 15 ausgebildet ist. Der Elektrodenstrang 14 ist an einem Führungsrahmen 16 befestigt, der oberhalb des Ofens 1 entlang der Ofenbühne 13 angeordnet ist.

Der Gleichstrom-Lichtbogenofen 1 mit dem Elektodenstrang 14 kann vorzugsweise zur Herstellung von TiO₂-haltiger Schlacke, für Ferrochrom, Ferromangan und andere Ferrolegierungen sowie für Nichteisen-Schlackenprozesse im Sinne eines Reduktionsofens verwendet werden. Hierzu wird Beschickungsgut, beispielsweise Ilmenit in Sandform, als Grundprodukt in den Ofen chargiert und zwar über die als Hohlelektrode ausgebildete Elektrode. Ilmenit wird mit Reduktionsmitteln vermischt und aufgeschmolzen. Das bei der Reduktion entstehende Roheisen, das zusammen mit den Bodenelektroden eine vergrößerte Anode bildet, wird anschließend über eine seitliche Öffnung 17 abgestochen. Das Beschickungsgut wird in Behältern 18 oberhalb der Ofenbühne 13 gespeichert und durch Vertikal- oder seitliche Beschickungsleitungen 19a,b durch die Hohlelektrode 12 in das Ofeninnere chargiert.

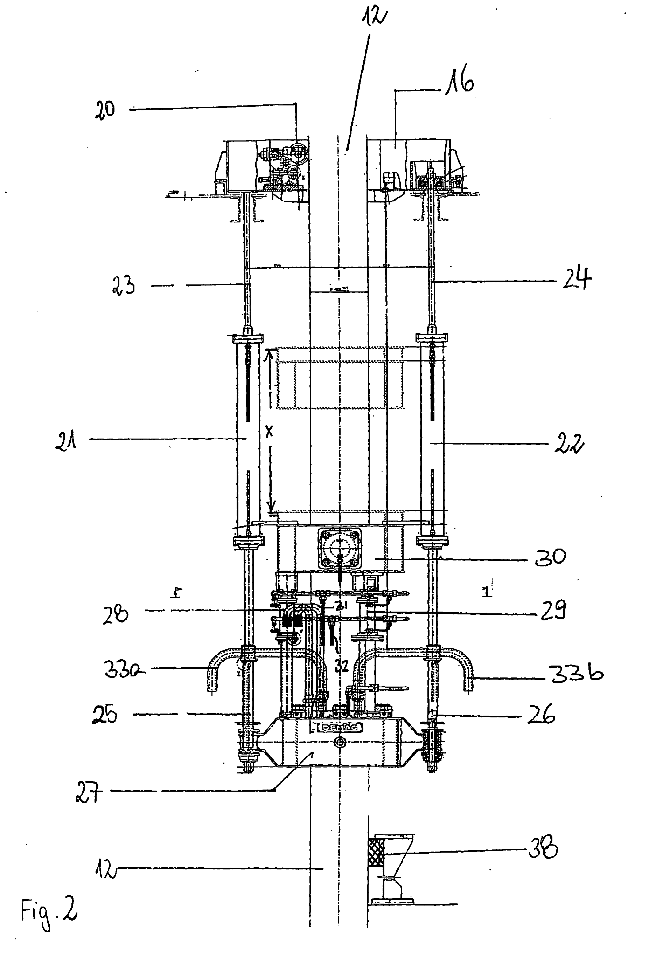

Die einzelnen Bauteile des Elektrodenstrangs sind detailliert in Fig. 2 dargestellt. Der Führungsrahmen 16 umfasst elektrodenseitig eine Führungsrolle 20, um Verkantungen bei dem Nachsetzvorgang der Elektrode 12 zu vermeiden. Das Hängesystem 15 besteht zum einen aus hydraulisch betätigten Elektroden-Regulierzylindern 21, 22, die die Aufhängung des gesamten Elektrodenstrangs 14 übernehmen. Diese sind zylinderseitig an dem Führungsrahmen 16 über Verbindungselemente 23, 24 hängend befestigt und erstrecken sich entlang der Elektrodenlängsachse. Die Verbindungselemente 23, 24 sind in dem Führungsrahmen 16 verankert. Die Enden ihrer Kolben 25, 26 sind fest mit einem Fassungsring 27 für die Elektrode 12 verbunden. Auf diesem Fassungsring 27 sind auf der vom Ofen abgekehrten Seite zwei beidseitig betätigbare hydraulische Hubzylinder 28, 29 angeordnet, über die ein erster bzw. oberer Nachsetzring 30 entlang der Elektrodenlängsachse hydraulisch verfahrbar ist, wobei die Ölleitungen mit 31, 32 bezeichnet sind. Über den Fassungsring 27 wird Strom in die Elektrode 12 geleitet. Hierzu wird eine Stromzuführungsleitung 33 über zuerst eine starr geführte und dann flexible Leitung an den Fassungsring 27 geführt. Nach der Detailansicht der Fig. 2 kann es sich auch um zwei Stromzuführungen 33a, b handeln.

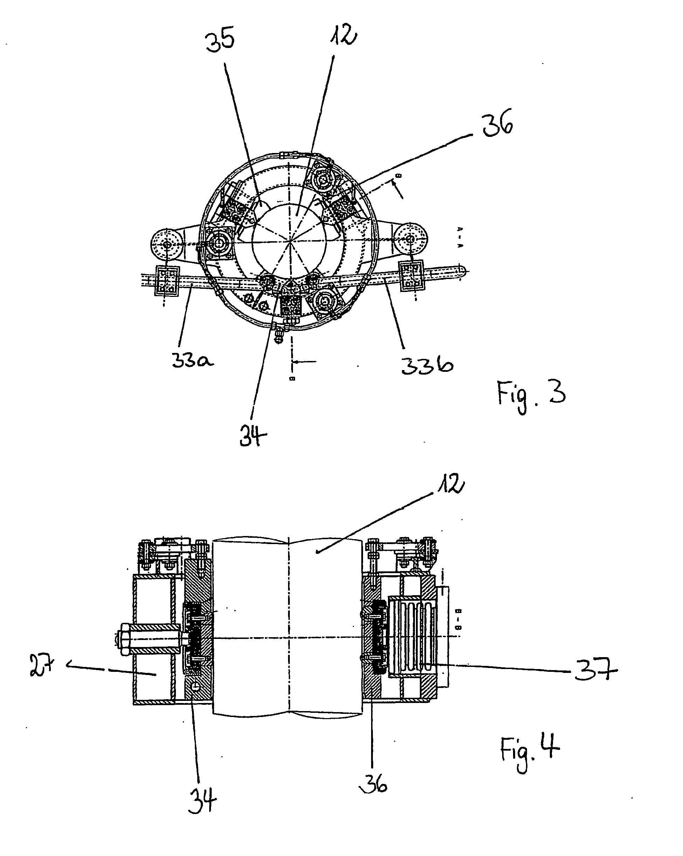

Mit Hilfe der Detailansicht der Fig. 3 und Fig. 4 wird die Arbeitsweise des unteren Fassungsrings 27 deutlich. Der untere Fassungsring 27, der gleichzeitig als zweiter Nachsetzring arbeitet, umfasst eine Stromzuführungsbacke 34 sowie zwei Klemmbacken 35, 36, die unterschiedlich stark an die Elektrodenumfangsfläche gedrückt werde können. Hierzu ist der Fassungsring 27 mit einem hydraulischen Anpresselement 37 versehen. Bei einer ersten Druckstufe kommen die Klemmbacken 35, 36 auf der Elektrodenoberfläche zur Anlage, so dass ein wirkungsvoller Stromfluss von den Stromzuführleitungen möglich ist. In diesem Druckstadium kann aber die Elektrode durch den Fassungsring 27 hindurch gedrückt werden. Bei einer zweiten Druckstufe werden die Klemmbacken 35, 36 mittels des sich ausdehnenden Anpresselements 37 fest um die Elektrodenfläche gespannt, so dass allein der Fassungsring 27 die Elektrode halten kann.

Nachfolgend wird die Funktion eines Nachsetzvorgangs bei dem erfindungsgemäßen Gleichstrom-Lichtbogenofen 1 beschrieben. Die Elektrode 12 wird in das Ofeninnere geführt und mittels des Hängesystems 15 gehalten. Die Elektrode 12 ragt durch den Führungsrahmen 16 und durch das Deckelherz 4 in den Ofen 1 hinein. Aus der Fig. 2 wird deutlich, dass die Ofendeckeldurchführung mit einer Abdichtung 38 gegenüber der Elektrodenumfangsfläche abgedichtet ist. Anfänglich wird die Elektrode von dem oberen Nachsetzring 30 gehalten. Wenn nun die Elektrode 12 nachgesetzt werden soll, wird dieser Nachsetzring 30 gelöst und über den Nachsetzhub x nach oben in Richtung Führungsrahmen 16 durch Ausfahren der doppelseitig beaufschlagbaren Hubzylinder 28, 29 verfahren. Auf diese Weise wird die Distanz zwischen dem Fassungsring 27 und Nachsetzring 30 erhöht. Anschließend wird der Nachsetzring 30 in der verfahrenen Position wieder an die Elektrode 12 geklemmt. Der Fassungsring 27 wird durch Entlasten des Anpresselementes 37 in die erste Druckstufe überführt. Während nach wie vor Strom fließen kann, kann die Elektrode durch Zurückverfahren der Hubzylinder 28, 29 und Distanzverkleinerung zwischen dem Nachsetzring 30 und dem Fassungsring 27 weiter in den Ofen geschoben werden und zwar durch den gelösten Fassungsring 27. Hierbei gleitet die Elektrode 12 vertikal entlang der Führungsrollen 20 des Führungsrahmens 16 und der Abdichtung 38 der Ofendeckeldurchführung. Wenn der Nachsetzvorgang beendet ist, wird der Fassungsring 27 wieder an die Elektrode 12 mit erhöhtem Anpressdruck geklemmt.

Insgesamt erweist sich der Ersatz einer Tragarmkonstruktion durch einen sich oberhalb des Ofens abstützenden Elektrodenstrang als sehr vorteilhaft für einen Gleichstrom-Lichtbogenofen. Indem die Elektrode ohne ein Abschalten des Ofens nachgesetzt werden kann, ist die Ausbringmenge insgesamt größer. Das System arbeitet im Vergleich gleichmäßiger und damit effektiver und wirtschaftlich vorteilhaft. Indem bisherige Vibrationen entfallen, wird Verschleiß an Führungsteilen bzw. Abdichtungsteilen, insbesondere am Ofendeckel, reduziert. Die Sicherheit bei CO-produzierenden Verfahren wird aufgrund der höheren und langen Dichtigkeit erhöht.

### Bezugszeichenliste:

- 1: Gleichstrom-Lichtbogenofen
- 2: Ofengefäß
- 3: Ofendeckel
- 4: Deckelherz
- 5: Rahmenkonstruktion
- 6: Säulen
- 7: Ofenwandung
- 8: Feuerfest-Material
- 9: Ofenboden
- 10: Bodenelektrode
- 11: Bodenelektrode
- 12: Elektrode
- 13: Ofenbühne
- 14: Elektrodenstrang
- 15: Hängesystem
- 16: Führungsrahmen
- 17: Abstichöffnung
- 18: Behälter
- 19: Vertikalbeschickungsleitung oder seitliche Beschickungsleitung
- 20: Führungsrolle
- 21: Elektroden-Regulierzylinder
- 22: Elektroden-Regulierzylinder
- 23: Verbindungselement
- 24: Verbindungselement
- 25: Kolbenende
- 26: Kolbenende
- 27: Elektroden-Fassungsring oder unterer Nachsetzring
- 28: Hubzylinder
- 29: Hubzylinder
- 30: erster oder oberer Nachsetzring
- 31: Ölleitung
- 32: Ölleitung
- 33: Stromzuführleitung (33a und b)
- 34: Stromzuführungsbacke
- 35: Klemmbacke
- 36: Klemmbacke
- 37: Anpresselement
- 38: Abdichtung

## Patentansprüche

1. Gleichstrom-Lichtbogenofen (1) mit mindestens einer Elektrode (12), die im Ofeninneren gehalten und zur Kompensation des Elektrodenabbrandes nachführbar ist, sowie mit einer Gegenelektrode (10, 11) im Ofen, beispielsweise einer Bodenelektrode, wobei der gesamte Elektrodenstrang (14) mit einer Elektrodenfassung und einer Nachsetzeinrichtung als Hängesystem (15) an einer Ofenbühne (13) oder einem Rahmen oberhalb des Ofens (1) angeordnet ist,
**dadurch gekennzeichnet,**
**dass** das Hängesystem (15) umfasst
- einen an der Ofenbühne (13) angeordneten Führungsrahmen (16) für die Elektrode (12)
- sich entlang der Elektrodenachse erstreckende Elektroden-Regulierzylinder (21, 22), die zylinderseitig an dem Führungsrahmen (16) hängend befestigt sind und die ofenseitig über ihre Kolben (25, 26) mit einem Fassungsring (27) für die Elektrode verbunden sind, wobei dieser Fassungsring (27) mit zwei Druckstufen arbeitet, sowie
- Hubzylinder (28, 29), die sich auf diesem Fassungsring (27) abstützen und über die ein erster Elektrodennachsetzring (30) entlang der Elektrodenachse innerhalb der Elekroden-Regulierzylinder (21, 22) verfahrbar ist,
wobei zum Nachsetzen der Elektrode (12) der erste Elektrodennachsetzring (30) gelöst wird und mittels der Hubzylinder (28, 29) nach oben verfahren wird, anschließend der erste Elektrodennachsetzring (30) wieder um die Elektrode (12) verspannt wird und diese hält und die
Elektrode (12) durch eine Hubbewegung in entgegengesetzte Richtung in den Ofen nachgesetzt wird.

2. Gleichstrom-Lichtbogenofen nach Anspruch 1,
**dadurch gekennzeichnet,**
**dass** der Fassungsring (27) mit einer stromzuführenden Leitung (33) in Verbindung steht und somit Strom in die Elektrode leitet und
**dass** in den Fassungsring (27) ein hydraulisches Anpresselement (37) integriert ist, das mit zwei Druckstufen arbeitet, wobei bei der ersten Druckstufe der Fassungsring (27) so mit der Elektrode in Kontakt steht, dass Strom in die Elektrode fließt, und die Elektrode (12) durch den Fassungsring (27) hindurch in den Ofen nachgesetzt wird und wobei bei der zweiten Druckstufe die Elektrode (12) von dem Fassungsring (27) im Sinne eines zweiten Nachsetzrings gehalten wird, während der erste Nachsetzring (30) geöffnet ist.

3. Gleichstrom-Lichtbogenofen nach einem der Ansprüche 1 oder 2,
**dadurch gekennzeichnet,**
**dass** die Elektrode (12) eine Hohlelektrode ist, durch die Beschickungsgut in den Ofen (1) chargiert wird.

4. Verwendung eines Gleichstrom-Lichtbogenofens (1) nach einem der Ansprüche 1 bis 3 zur Herstellung von TiO₂-haltigen Schlacke zur Weiterverarbeitung für die Pigmentindustrie, wobei ein titanhaltiges Erz, wie Ilmenit in Sandform, als Grundprodukt in den Ofen chargiert und mit Reduktionsmitteln vermischt wird und mittels der Energie der Elektroden aufgeschmolzen und reduziert wird.

5. Verwendung eines Gleichstrom-Lichtbogenofens (1) nach einem der Ansprüche 1 bis 3 zur Herstellung von Ferrolegierungen, wie Ferrochrom und Ferromangan, oder für Nichteisen-Schlackenprozesse.

## Claims

1. A direct current arc furnace (1) with at least one electrode (12) that is held in the interior of the furnace and can be readjusted so as to compensate for the electrode consumption, and with a counterelectrode (10, 11) in the furnace, for example, a hearth electrode, wherein the entire electrode branch (14) with an electrode socket and a readjusting device is arranged on a furnace platform (13) or a frame above the furnace (1) in the form of a suspension system (15),
**characterized in**
**that** the suspension system (15) comprises
- a guide frame (16) for the electrode (12) that is arranged on the furnace platform (13),
- electrode regulating cylinders (21, 22) that extend along the electrode axis and are fixed on the guide frame (16) in a suspended fashion on the cylinder side, wherein said electrode regulating cylinders are connected to a socket ring (27) for the electrode by means of their pistons (25, 26) on the furnace side, and wherein this socket ring (27) operates with two pressure stages, as well as
- lifting cylinders (28, 29) that are supported on this socket ring (27) and able to displace a first electrode readjusting ring (30) along the electrode axis within the electrode regulating cylinders (21, 22),
wherein the electrode (12) is readjusted by loosening and displacing the first electrode readjusting ring (30) upward by means of the lifting cylinders (28, 29), subsequently retightening the first electrode readjusting ring (30) around the electrode (12) such that it holds the electrode and
readjusting the electrode (12) in the furnace by means of a lifting movement in the opposite direction.

2. The direct current arc furnace according to Claim 1,
**characterized in**
**that** the socket ring (27) is connected to a power supply line (33) and thusly conducts a current into the electrode, and in that a hydraulic pressing element (37) is integrated into the socket ring (27) and operates with two pressure stages, wherein the socket ring (27) is connected to the electrode in the first pressure stage such that a current flows into the electrode and the electrode (12) is readjusted into the furnace by the socket ring (27), and wherein the electrode (12) is held by the socket ring (27) in the sense of a second readjusting ring while the first readjusting ring (30) is opened in the second pressure stage.

3. The direct current arc furnace according to Claim 1 or 2,
**characterized in**
**that** the electrode (12) consists of a hollow electrode, through which the furnace (1) is charged with charging material.

4. The utilization of a direct current arc furnace (1) according to one of Claims 1 to 3 for producing slag containing TiO₂ that is additionally processed for the pigment industry, wherein the furnace is charged with a base material in the form of an ore containing titanium, e.g., ilmenite, and the base material is mixed with reducing agents as well as melted and reduced with the energy of the electrodes.

5. The utilization of the direct current arc furnace (1) according to one of Claims 1 to 3 for producing ferroalloys such as ferrochromium and ferromanganese or for nonferrous slagging processes.

## Revendications

1. Four à arc électrique à courant continu (1), comportant au moins une électrode (12) qui est maintenue à l'intérieur du four et peut être avancée pour compenser la perte au feu de l'électrode ainsi qu'une contre-électrode (10, 11) dans le four, par exemple une électrode de fond, l'ensemble de la ligne d'électrode (14) étant disposée avec une pince d'électrode et un dispositif d'avance sous forme de système de suspension (15) sur un plancher de four (13) ou un cadre à l'intérieur du four (1),
**caractérisé en ce que**
le système de suspension (15) comprend
- un cadre de guidage (16) disposé sur le plancher du four (13) pour l'électrode (12),
- des cylindres de régulation d'électrode (21, 22) s'étendant le long de l'axe de l'électrode, qui, côté cylindre, sont fixés en suspension sur le cadre de guidage (16) et qui, côté four, sont reliés par leurs pistons (25, 26) à un patin de pince (27) pour l'électrode, ce patin de pince (27) fonctionnant avec deux niveaux de pression, ainsi que
- des vérins élévateurs (28, 29) qui s'appuient sur ce patin de pince (27) et grâce auxquels un premier patin d'avance d'électrode (30) peut être déplacé le long de l'axe de l'électrode dans les cylindres de régulation d'électrode (21, 22),
sachant que, pour avancer l'électrode (12), on relâche le premier patin d'avance d'électrode (30) et on le déplace vers le haut au moyen des vérins élévateurs (28, 29), qu'ensuite le premier patin d'avance d'électrode (30) est de nouveau serré autour de l'électrode (12) et la maintient et que
l'électrode (12) est avancée dans le four dans le sens opposé par un mouvement de levage.

2. Four à arc électrique à courant continu (1) selon la revendication 1,
**caractérisé en ce que**
le patin de pince (27) est en liaison avec un câble d'alimentation en courant (33) et conduit ainsi du courant dans l'électrode et que, dans le patin de pince (27), est introduit un élément de compression hydraulique (37) fonctionnant avec deux niveaux de pression, le patin de pince (27) étant, avec le premier niveau de pression, en contact avec l'électrode de manière à ce que du courant s'écoule dans l'électrode et l'électrode (12) étant avancée par le patin de pince (27) à travers le four et l'électrode étant, avec le deuxième niveau de pression, maintenue par le patin de pince (27) dans le sens d'un deuxième patin d'avance pendant que le premier patin d'avance (30) est ouvert.

3. Four à arc électrique à courant continu (1) selon une des revendications 1 ou 2,
**caractérisé en ce que**
l'électrode (12) est une électrode creuse par laquelle du produit de chargement est chargé dans le four (1).

4. Utilisation d'un four à arc électrique à courant continu (1) selon la revendication 1 à 3 pour fabriquer de la scorie contenant du TiO₂ destinée à une transformation ultérieure pour l'industrie des pigments, dans laquelle un minerai contenant du titane, comme de l'ilménite sous forme sableuse, est chargé comme produit de base dans le four et mélangé avec des agents réducteurs puis fondu au moyen de l'énergie des électrodes et réduit.

5. Utilisation d'un four à arc électrique à courant continu (1) selon une des revendications 1 à 3 pour fabriquer des ferroalliages, comme du ferrochrome et du ferromanganèse ou pour des processus à scories non ferreuses.
